# EUROPÄISCHE PATENTSCHRIFT

(11) **EP 0 482 280 B1**
(45) Veröffentlichungstag und Bekanntmachung des Hinweises auf die Patenterteilung: **13.12.1995**
(21) Anmeldenummer: 91103331.4
(22) Anmeldetag: 05.03.1991
(51) Int. Cl.: G03B 27/58, G03B 42/04, B65H 3/06

(54) **Blattfilmmagazin für einen Filmwechsler**
Sheet film magazine for a film changer
Magasin pour des films en feuille pour un changeur de films

(30) Priorität: 22.10.1990 SE 9003370
(43) Veröffentlichungstag der Anmeldung: 29.04.1992
(73) Patentinhaber: Siemens-Elema AB, 171 95 Solna 1 (SE); SIEMENS AKTIENGESELLSCHAFT, 80333 München (DE)
(72) Erfinder: Björk, Erik, S-113 54 Stockholm (SE); Wiklund, Ola, S-175 76 Järfälla (SE); Egerström, Johan, S-131 36 Nacka (SE)

(56) Entgegenhaltungen:
- EP-A- 0 402 491
- DE-A- 2 007 594
- GB-A- 1 397 379
- US-A- 3 869 116

## Beschreibung

Die Erfindung bezieht sich auf ein Blattfilmmagazin für einen Filmwechsler mit einer Transportvorrichtung zum Transportieren einzelner Filmblätter von einem auf einer Filmauflageebene aufliegenden Filmstapel zum Aufnahmeteil des Filmwechslers, wobei die Transportvorrichtung mindestens ein Transportrad aufweist, das auf einer zur Filmauflageebene parallelen Welle angebracht ist und das mittels Antriebsmitteln in der Transportrichtung der Filmblätter antreibbar ist, und wobei die Transportvorrichtung außerdem Mittel besitzt, die den Abstand zwischen einem Filmblatt und dem Transportrad derart variieren, daß das Transportrad beim Transportieren eines Filmblattes vom Filmstapel zum Aufnahmeteil an der Oberfläche des Filmblattes anliegt und nach einem beendeten Filmtransport von der Oberfläche des Filmblattes entfernt wird.

Ein Blattfilmmagazin dieser Art, das nicht für einen Filmwechsler vorgesehen ist, ist durch die DE-OS 2 747 623 bekannt. Die Transportvorrichtung des Blattfilmmagains umfaßt eine Druckplatte (28), die an dem einen Ende eines Armes befestigt ist, der fast das ganze Ladungsteil des Magazins entlang verläuft und dessen anderes Ende um eine Achse drehbar gelagert ist. Die Druckplatte mit dem Arm ist oberhalb des Filmstapels bzw. des Filmblattes angeordnet. Unterhalb des Filmstapels ist ein Transportrad (14) angebracht. Beim Transportieren eines Filmblattes aus dem Blattfilmmagazin wird der Arm mit der Druckplatte gegen das Ende des Filmstapels, das oberhalb des Transportrades liegt, heruntergeschwenkt. Wenn die Druckplatte gegen den Filmstapel anliegt, wird dieser gegen das Transportrad, gedrückt, wodurch das unterste Filmblatt des Filmstapels weitertransportiert werden kann. Danach wird die Druckplatte mit Hilfe von zwei parallel laufenden Stützarmen hochgehoben. Das eine Ende jeden Stützarmes läuft auf einer Schiene, die am Boden des Magazins angebracht ist. Die anderen Enden der Stützarme tragen je eine Rolle, die gegen den Arm der Druckplatte anliegt. Die Stützarme sind also die gesamte Länge des Druckplattenarmes entlang verschiebbar. Wenn die Druckplatte gegen den Filmstapel anliegt, befinden sich die Stützarme mit den Rollen im Bereich der Achse, um die der Arm gedreht wird. Wenn ein Filmblatt aus dem Magazin heraustransportiert worden ist, werden die Stützarme in Richtung der Druckplatte verschoben, wobei die Druckplatte vom Filmstapel abhebt. Beim Transportieren des nächsten Filmblattes werden die Stützarme in Richtung der Achse, um die der Druckplattenarm drehbar ist, verschoben, wobei die Druckplatte wieder gegen den Filmstapel drückt. Die beschriebene relativ komplizierte und streckenmäßig lange Verschiebung der Stützarme zur Steuerung der Bewegungen der Druckplatte sind zeitraubend, so daß einen derartig hohe Filmtransportfrequens,wie sie bei einem Filmwechsler erforderlich ist, mit dieser Transportvorrichtung nicht möglich ist.

In der US.PS 4 234 796 ist ein Röntgenfilmwechsler mit einer Transportvorrichtung für den Transport von Filmblättern vom Aufnahmeteil zur Empfangskassette beschrieben. Die Transportvorrichtung, die vor der Filmeintrittsöffnung der Empfangskassette angebracht ist, enthält ein Transportrad und eine Druckrolle. Die Druckrolle kann in eine erste Lage gebracht werden, in der sie gegen das Transportrad drückt, und in eine weitere Lage, in der sie mit Abstand zum Transportrad angeordnet ist. Die Druckrolle ist an einem Ende eines Henbelarmes befestigt, an dessem anderen Ende, eine Steuerrolle angeordnet ist, die unter Federdruck auf einer Kurvenscheibe läuft die mit zwei Nocken versehen ist. Wenn die Kurvenscheibe eine Lage aufweist, in der die Steuerrolle an einem Nocken anliegt, wird der Hebelarm um eine Welle derart gedreht, daß die Druckrolle gegen das Transportrad drückt. Wenn die Kurvenscheibe danach in eine Lage zwischen den Nocken gedreht wird, wird der Hebelarm um seine Achse derart gedreht, daß die Druckrolle vom Transportrad abhebt. Die Steuerung der Druckrolle ist von der Länge der Nocken abhängig, was bedeutet, daß die Steuerrolle entlang der gesamten Nockenlänge laufen muß, bevor die Druckrolle vom Transportrad abhebt. Das kann eine hohe Filmtransportfrequens verhindern.

Ein ähnlicher Röntgenfilmwechsler mit einer älteren Priorität ist auch durch die EP-A-0 402 491 bekannt.

Der Erfindung liegt die Aufgabe zugrunde, ein Blattfilmmagazin mit einer Transportvorrichtung der eingangs genannten Art zu schaffen, die in einfacher Weise eine verhältnismäßig hohe Filmtransportfrequenz erlaubt.

Diese Aufgabe ist erfindungsgemäß dadurch gelöst, daß die Mittel Trennorgane aufweisen, die das Transportrad von der Oberfläche des Filmblatts trennen, sobald die Antriebsmittel entgegen der Richtung, die den Transport der Filmblätter bewirkt, angetrieben werden, sowie vom Drehwinkel des Transportrads abhängige weitere Mittel, die das Transportrad von der Oberfläche des Filmblattes weiter entfernen, nachdem es von dieser getrennt ist. Dies bedeutet, daß das Transportrad unmittelbar nach dem Transport eines Filmes von der Filmoberfläche entfernt wird, wodurch ein neues Filmblatt rasch in eine Startposition für den Transport gebracht werden kann.

In einer vorteilhaften Ausbildung der Erfindung wird vorgeschlagen, daß die weiteren Mittel, die den Abstand zwischen Filmblatt und Transportrad variieren, eine im Magazin angeordnete Rolle enthalten, die an einer Kurvenscheibe anliegt, die derart geformt ist, daß mit Hilfe der Rolle in einer ersten Lage das Transportrad an der Oberfläche eines Filmblattes anliegt un in einer weiteren Lage von dieser Oberfläche abhebt.

Bei einer vorteilhaften Weiterbildung der Erfindung wird in dem Moment, in dem die Kurvenscheibe anfängt sich gegen die Filmtransportrichtung zu drehen, die Rolle durch das Trennorgan rasch aus ihrer Lage gebracht, so daß das Transportrad von der Oberfläche des Filmblattes getrennt wird. Hierdurch wird die beschriebene unmittelbare Trennung des Transportrades von der Oberfläche des Filmblattes erreicht.

In einer besonders günstigen Ausgestaltung umfaßen die Trennorgane eine Wippe, die um eine Achse drehbar ist und an der die Rolle um eine zweite Achse drehbar angeordnet ist. Durch die Wippe kann die Rolle in einfacher Weise schnell aus ihrer Lage an der Kurvenscheibe derart seitlich verschoben werden, daß das Transportrad unmittelbar von der Oberfläche des Filmblattes abhebt.

Im Hinblick auf eine konstruktiv einfache Ausgestaltung der Erfindung empfiehlt es sich, daß die Kurvenscheibe an der selben Welle befestigt ist, um die das Transportrad drehbar angeordnet ist. Die Erfindung kann weiter ausgebildet werden, indem die Bewegungen des Transportrades und der Kurvenscheibe von einem Zahnrad beeinflußt werden, das an der gemeinsamen Welle des Transportrades und der Kurvenscheibe fest angeordnet ist und wobei die Bewegungen des Zahnrades mittels einer Zahnstange gesteuert werden. Durch einen derartigen Aufbau ist eine verhältnismäßig einfache und kompakte Transportvorrichtung für Filmblätter gegeben.

In einer vorteilhaften Weiterbildung der Erfindung wird vorgeschlagen, daß die Kurvenscheibe eine runde Scheibe mit einer Ausnehmung für die Rolle ist. In dieser Ausführungsform kan die Rolle durch Drehen der Kurvenscheibe rasch an der Ausnehmung bewegt werden. Dadurch ist erreicht, daß die Rolle mit der Kurvenscheibe ihrerseits das Transportrad derart beeinflußt, daß es rasch von einer Parklage, in der es nicht in Verbindung mit einem Filmblatt steht, in einer Lage, in der es an der Oberfläche des Filmblattes anliegt, gebracht wird.

Im Hinblick auf eine weitere Ausgestaltung der Erfindung wird vorgeschlagen, daß das Blattfilmmagazin im Anschluß zur Austrittsseite mit einer Steuervorrichtung versehen ist, die gewährleistet, daß nur jeweils ein Filmblatt aus dem Blattfilmmagazin heraustransportiert wird. Die Steuervorrichtung umfaßt die Filmaustrittsöffnung, deren Höhe weniger als die Stärke von zwei Filmblätter beträgt, sowie mindestens einen ersten Niederhalter, der in dem Blattfilmmagazin im Anschluß an die Filmaustrittsöffnung angebracht ist und der mindestens ein Filmblatt gegen eine Filmebene drückt. Durch diesen sehr einfachen Aufbau der Steuervorrichtung ist gewährleistet, daß nur jeweils ein Filmblatt aus dem Blattfilmmagazin heraustransportiert wird. Der Niederhalter steuert die Filmblätter derart, daß die vordere Kante derjenigen Filmblätter, die aus dem Magazin heraustransportiert werden sollen, genau vor die Filmaustrittsöffnung zu liegen kommen, die durch ihr Höhenmaß, nur jeweils ein Filmblatt passieren läßt.

Die Erfindung ist nachfolgend anhand eines in den Zeichnungen dargestellten Ausführungsbeispiels näher erläutert. Es zeigen:
FIG 1 bis 4 Seitenansichten eines Blattfilmmagazins mit einer Transportvorrichtung nach der Erfindung, wobei die Transportvorrichtung in verschiedenen Lagen gezeigt wird, und
FIG 5 eine Steuervorrichtung für Filmblätter.

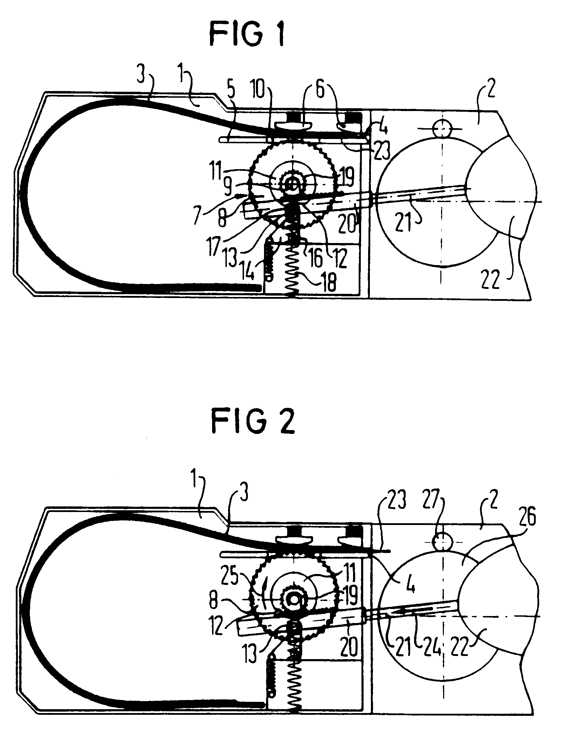

In der FIG 1 ist ein Blattfilmmagazin 1 gezeigt, das an dem Aufnahmeteil 2 eines Filmwechslers angeschlossen ist. Das Blattfilmmagazin 1 ist mit einem Filmstapel 3 geladen, der im Magazin C-förmig angeordnet ist. Das vordere Ende des Filmstapels 3, d.h. das Ende, das an der Filmaustrittsöffnung 4 des Blattfilmmagazins liegt, ist zwischen einer Filmebene 5 und schematisch gezeigten Andrückteile für die Filmblätter in Form von federbelasteten Platten 6 eingespannt. Die Filmebene 5, auf der der Filmstapel 3 ruht, verläuft bis zu einer Austrittsöffnung für die Filmblätter und ist achsfluchtend mit dieser im Anschluß zur Filmaustrittsöffnung 4 und unterhalb der Filmebene 5 ist eine Transportvorrichtung 7 angebracht. Die Transportvorrichtung 7 weist ein Transportrad 8 auf, das auf einer zur Filmebene 5 parallelen Welle 9 angeordnet ist und das durch eine Öffnung 10 in der Filmebene 5 in Verbindung mit dem Filmstapel 3 gebracht werden kann. Das Transportrad 8 kann vorzugsweise ein Zahnrad sein. An der Welle 9 ist auch eine Kurvenscheibe befestigt, die aus einer runden Scheibe 11 mit einer Ausnehmung 12 für eine Rolle 13 besteht, die mit Hilfe einer Wippe 14 dazu gebracht wird, an der Scheibe 11 anzuliegen. Die Wippe 14 ist um eine am Magazin befestigte Achse 16 drehbar. Die Rolle 13, die auf der Wippe 14 angebracht ist, ist um eine zweite Achse 17 drehbar. Die Achsen 16,17 der Rolle 13 und der Wippe 14 sind achsfluchtend zu der gemeinsamen Welle 9 für das Transportrad 8 und die Kurvenscheibe und senkrecht zur Filmebene 5 angeordnet. Das Transportrad 8 sowie die Scheibe 11 sind mit Hilfe einer Feder 18, deren eines Ende an der Welle 9 und deren anderes Ende am Boden des Blattfilmmagazins 1 befestigt ist, derart federbelastet, daß die Scheibe 11 gegen die Rolle 13 drückt. An der Welle 9 ist auch ein Zahnrad 19 befestigt, das im Eingriff mit einer Zahnstange 20 steht, die ihrerseits an einer weiteren Stange 21 befestigt ist, die von einer im Aufnahmeteil 2 angeordneten Exzenterscheibe 22 gesteuert wird.

In der FIG 1 ist die Transportvorrichtung 7 in ihrer Parklage gezeigt, was bedeutet, daß das Transportrad 8 vom untersten Filmblatt des Filmstapels 3 getrennt ist. Damit diese Lage erreicht wird, muß die Rolle 13 in der Ausnehmung 12 der Scheibe 11 liegen.

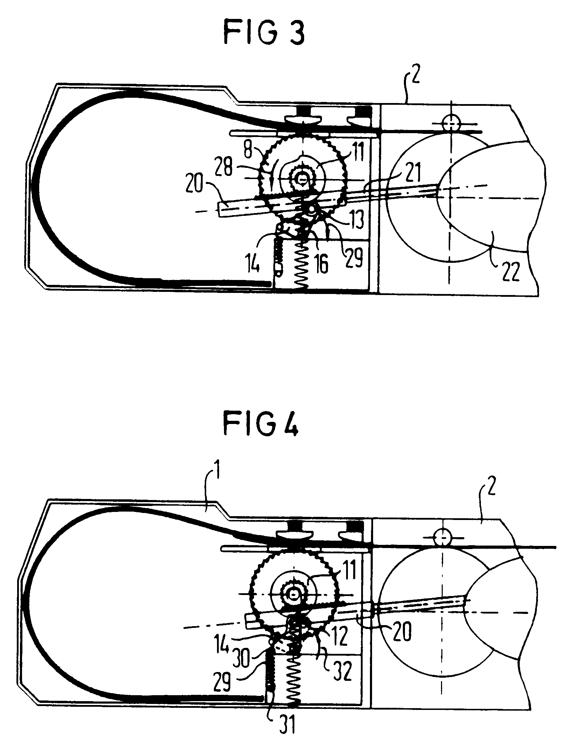

Wenn das Filmblatt 23 vom Filmstapel getrennt und in das Aufnahmeteil 2 transportiert werden soll, wird die Stange 21 und die Zahnstange 20 mit Hilfe der Exzenterscheibe 22 in Richtung des Pfeiles 24 gedrückt, wobei die Zahnstange 20 das Zahnrad 19 derart beeinflußt, daß es in der Richtung des Pfeiles 25 (FIG 2) gedreht wird. Gleichzeitig wird die Scheibe 11 sowie das Transportrad 8 in die gleiche Richtung mitgedreht. Durch die Drehung der Scheibe 11 verläßt die Rolle 13 unmittelbar ihre Position in der Ausnehmung 12 und drückt nun die Scheibe 11 und damit gleichzeitig das Transportrad 8 nach oben, wodurch dieses gegen die Oberfläche des Filmblattes 23 drückt. Das Transportrad 8 transportiert auf diese Weise das Filmblatt durch die Filmaustrittsöffnung 4 in das Aufnahmeteil 2 bis zu weiteren Transporträdern 26, 27, die die vordere Kante des Filmblattes greifen und dieses für eine Aufnahme weitertransportieren. Das Transportrad 8 ist mit einem Freilaufrad versehen, so daß es während des schnellen Weitertransportes durch die weiteren Transporträder 26, 27 nicht bremst, sondern mit derselben Geschwindigkeit mitrollt. Ist nun die Zahnstange 20 in ihre äußerste Lage verschoben worden, hat die Scheibe 11 eine in der FIG 3 gezeigte Position eingenommen. In der FIG 3 ist auch gezeigt, daS die Zahnstange 20,wenn sie ihre äußerste Position erreicht hat, durch Beeinflussung der Stange 21 und der Exzenterscheibe 22 in die entgegengesetzte Richtung, d.h. in Richtung des Aufnahmeteils 2, verschoben wird. In dem Augenblick, in dem die Zahnstange und damit auch die Scheibe 11 die Richtung ändern, wie der Pfeil 28 es zeigt, wird die Rolle 13 unmittelbar aus ihrer Lage gebracht. Dazu wird die Wippe 14 um die Achse 16 in der Richtung des Pfeiles 29 gedreht. Das Transportrad 8 verläßt gleichzeitig die Oberfläche des Filmblattes. Die Rolle 13 ist mit einer Freilaufradanordnung versehen und läuft auf der Scheibe 11 mit, wenn diese in Filmtransportrichtung gedreht wird. Wird die Scheibe 11 in entgegengesetzter Richtung gedreht, so sperrt die Rolle 13 und rutscht aus ihrer Lage.

In der FIG 4 ist gezeigt, daS die Scheibe 11 durch die bereits beschriebenen Mittel zurückgedreht wird, so daß deren Ausnehmung in eine Lage gebracht wird, bei der die Rolle 13 mittels der Wippe 14 in diese Ausnehmung 12 einrastet. Die Wippe 14 wird in ihre Ursprungslage zurückgedreht. Dies erfolgt mittels einer Feder 29, deren eines Ende an einem an der Wippe 14 angebrachten Zapfen 30 und deren anderes Ende an einem am Magazin angeordneten Zapfen 31 befestigt ist. Die strichpunktierte Wippe 14 in dieser FIG und der Pfeil 32 sollen die Drehung der Wippe 14 aus einer in der FIG 3 gezeigten Lage in einer Parklage darstellen.

In diesem Ausführungsbeispiel ist lediglich eine Transportvorrichtung 7 beschrieben. Es ist natürlich von Vorteil, zwei Transportvorrichtungen 7 zu verwenden, die an den Enden derselben Welle 9, die sich über die gesamte Breite des Blattfilmmagazins 1 erstreckt, angebracht sind.

Der beschriebene Zyklus wird für jedes Filmblatt, das vom Magazin 1 zum Aufnahmeteil 2 transportiert werden soll, wiederholt. Durch die rasche Trennung des Transportrades 8 von der Oberfläche des Filmblattes schon bevor die Ausnehmung der Scheibe 11 ihre Parklage, in der die Rolle 13 in die Ausnehmung 12 einrastet, erreicht hat, ist eine sehr hohe Filmtransportfrequenz möglich.

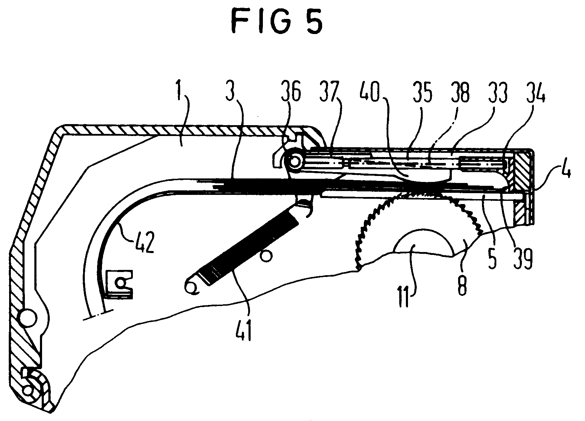

In der FIG 5 ist dargestellt, daß das Blattfilmmagazin 1 mit einer im Anschluß zur Filmaustrittsseite angeordnenten Steuervorrichtung für die Filmblätter versehen ist. Die Steuervorrichtung umfaßt eine Filmaustrittsöffnung 4, deren Höhe weniger als die Stärke zweier Filmblätter beträgt, sowie mindestens einen federbelasteten ersten Niederhalter 33, der im Anschluß zur Filmaustrittsöffnung 4 angebracht ist. Der erste Niederhalter 33 weist einen Kopf 34 auf, der an einem Ende einer Welle 35 befestigt ist, die etwa parallel mit der Filmebene 5 verläuft und deren freies Ende um eine Achse 36 drehbar ist. Die Welle 35 ist durch eine Feder 37 belastet, so daß die Welle den Kopf 34 gegen die Filmebene 5 drückt. Der Kopf 34 ist auch um die Längsachse 38 der Welle 35 drehbar. Außerdem ist die Anlagefläche des Kopfes 34, die bei einem leeren Magazin an der Filmebene anliegt, an der der Filmaustrittsöffnung 4 abgewandten Kante 39 abgerundet bzw. abgephast. Gegenüber dem Transportrad 8 ist ein zweiter Niederhalter 40 vorgesehen, der ein langgestrecktes Teil aufweist, das auf der Achse 36 des ersten Niederhalters 33 angebracht ist. Der zweite Niederhalter 40 ist mittels einer Zugfeder 41 federbelastet.

Beim Laden des Blattfilmmagazins mit einem Filmstapel 3 wird das eine Ende des Filmstapels 3 zwischen der Filmebene 5 und dem zweiten Niederhalter 40 bis zum Kopf 34 des ersten Niederhalters 33 hineingeschoben. Der Rest der Länge des Filmstapels 3 wird gegen das gebogene Blech 42 im Blattfilmmagazin gelegt. In dieser Lage drückt der zweite Niederhalter 40 gegen das oberste Filmblatt des Filmstapels 3, so daß das unterste Filmblatt gegen das Transportrad 8 drückt. Wenn das Transportrad 8 in Transportrichtung der Filmblätter angetrieben wird, wird das unterste Filmblatt gegen den Kopf 34 geschoben und hebt diesen auf Grund der abgerundeten bzw. abgephasten Kante 39 an. Der Kopf 34 drückt nun auf die Oberfläche des Filmblattes, so daß dessen vorderes Ende genau vor der Filmaustrittsöffnung 4 liegt. Selbst wenn zwei oder drei Filmblätter gleichzeitig transportiert werden und sich unter den Kopf 34 schieben, stoßen außer den untersten alle Filmblätter gegen die Wand oberhalb der Filmaustrittsöffnung 4. Wenn das unterste Filmblatt aus dem Magazin 1 heraustransportiert worden ist, drückt der Kopf 34 durch die Federkraft auf die Oberfläche des nächsten untersten Filmblattes, bis dieses genau vor die Filmaustrittsöffnung 4 zu liegen kommt, wodurch dieses Filmblatt heraustransportiert werden kann. Die Federbelastung des ersten Niederhalters 33 ist so angepaßt, daß der Kopf 34 ein Filmblatt, das gegen die Wand anliegt, herunterdrücken kann und gleichzeitig erlaubt, daß das Filmblatt aus der Filmaustrittsöffnung 4 transportiert werden kann, ohne daß der Kopf 34 das Filmblatt bremst.

Wegen der Zugfeder 41 für den zweiten Niederhalter 40 wird eine konstante Kraft gegen den Filmstapel 3 unabhängig von der Stärke des Filmstapels 3 erhalten. Die Größe der Federkraft der Zugfeder 41 ist auch an die notwendigen Kraft angepaßt, die erforderlich ist, damit die Zähne des Transportrades 8 das unterste Filmblatt des Filmstapels 3 greifen.

Durch die beschriebene Steuervorrichtung 4, 34 ist gewährleistet, daß jeweils lediglich nur ein Filmblatt aus dem Magazin heraustransportiert wird.

### Bezugszeichenliste

- 1: Blattfilmmagazin
- 2: Aufnahmeteil
- 3: Filmstapel
- 4: Filmaustrittsöffnung
- 5: Filmebene
- 6: Platte
- 7: Transportvorrichtung
- 8,26,27: Transportrad
- 9: Welle
- 10: Öffnung
- 11: Scheibe, Kurvenscheibe
- 12: Ausnehmung
- 13: Rolle
- 14: Wippe, Trennorgan
- 16,17,36: Achse
- 18,29,37: Feder
- 19: Zahnrad
- 20: Zahnstange
- 21: Stange
- 22: Exzenterscheibe
- 23: Filmblatt
- 24,25,28,32: Pfeil
- 30,31: Zapfen
- 33: erster Niederhalter
- 34: Kopf für den Niederhalter
- 35: Welle für den Niederhalter
- 38: Längsachse
- 39: Kante
- 40: zweiter Niederhalter
- 41: Zugfeder
- 42: gebogenes Blech

## Patentansprüche

1. Blattfilmmagazin (1) für einen Filmwechsler, mit einer Transportvorrichtung (7) zum Transportieren einzelner Filmblätter (23) von einem auf einer Filmauflageebene (5) aufliegenden Filmstapel zum Aufnahmeteil (2) des Filmwechslers, wobei die Transportvorrichtung mindestens ein Transportrad (8) aufweist, das auf einer zur Filmauflageebene parallelen Welle (9) angebracht ist und das mittels Antriebsmitteln (20) in der Transportrichtung der Filmblätter antreibbar ist, und wobei die Transportvorrichtung außerdem Mittel (11, 13, 14) besitzt, die den Abstand zwischen einem Filmblatt (23) und dem Transportrad derart variieren, daß das Transportrad beim Transportieren eines Filmblattes vom Filmstapel zum Aufnahmeteil an der Oberfläche des Filmblattes anliegt und nach einem beendeten Filmtransport von der Oberfläche des Filmblattes entfernt wird, **dadurch gekennzeichnet,** daß die Mittel (11, 13, 14) Trennorgane (14) aufweisen, die das Transportrad (8) von der Oberfläche des Filmblatts trennen, sobald die Antriebsmittel (20) entgegen der Richtung, die den Transport der Filmblätter bewirkt, angetrieben werden, sowie vom Drehwinkel des Transportrads abhängige weitere Mittel (11, 13), die das Transportrad (8) von der Oberfläche des Filmblattes weiter entfernen, nachdem es von dieser getrennt ist.

2. Blattfilmmagazin nach Anspruch 1, **dadurch gekennzeichnet**, daß die weiteren Mittel eine im Magazin angeordnete Rolle (13) enthalten, die an einer Kurvenscheibe (11) anliegt, die derart geformt ist, daß mit Hilfe der Rolle (13) in einer ersten Lage das Transportrad (8) an der Oberfläche des Filmblattes anliegt und in einer zweiten Lage von dieser Oberfläche abhebt.

3. Blattfilmmagazin nach Anspruch 2, **dadurch gekennzeichnet**, daß in dem Moment, in dem die Kurvenscheibe (11) anfängt sich gegen die Filmtransportrichtung zu drehen, die Rolle (13) durch das Trennorgan (14) rasch aus ihrer Lage gebracht wird, so daß das Transportrad (8) von der Oberfläche des Filmblattes (23) getrennt wird.

4. Blattfilmmagazin nach Ansprüch 2 oder 3, **dadurch gekennzeichnet**, daß die Trennorgane (14) eine Wippe (14) umfassen, die um eine Achse (16) drehbar ist und an der die Rolle (13) um eine zweite Achse (17) drehbar angeordnet ist.

5. Blattfilmmagazin nach einen der Ansprüche 2 bis 4, **dadurch gekennzeichnet**, daß die Kurvenscheibe (11) an der selben Welle (9) befestigt ist, um die das Transportrad (8) drehbar angeordnet ist.

6. Blattfilmmagazin nach einem der Ansprüche 4 bis 5, **dadurch gekennzeichnet**, daß die Achsen (16,17) der Rolle (13) und der Wippe (14) achsfluchtend zu der Welle (9) des Transportrades (8) und senkrecht zur Transportrichtung des Filmblattes (23) liegen.

7. Blattfilmmagazin nach einem der Ansprüche 2 bis 6, **dadurch gekennzeichnet**, daß das Transportrad (8) bzw. die Kurvenscheibe (11) derart federbelastet sind, daß eine Kraft auf diese in Richtung zur Rolle (13) ausgeübt wird.

8. Blattfilmmagazin nach einem der Ansprüche 2 bis 7, **dadurch gekennzeichnet**, daß die Rolle (13) mit einer Freilaufvorrichtung versehen ist, so daß die Rolle (13) auf der Kurvenscheibe (11) mitläuft, wenn diese in die Transportrichtung des Filmblattes (23) gedreht wird, und sperrt, wenn die Kurvenscheibe (11) in die entgegengesetzte Richtung gedreht wird.

9. Blattfilmmagazin nach einem der Ansprüche 2 bis 8, **dadurch gekennzeichnet**, daß die Kurvenscheibe (11) eine runde Scheibe mit einer Ausnehmung (12) für die Rolle (13) ist.

10. Blattfilmmagazin nach einem der Ansprüche 1 bis 9, **dadurch gekennzeichnet,** daß das Transportrad (8) ein Zahnrad ist.

11. Blattfilmmagazin nach einem der Ansprüche 1 bis 10, **dadurch gekennzeichnet**, daß das Transportrad (8) im Bereich der Filmaustrittsöffnung (4) angeordnet ist.

12. Blattfilmmagazin nach einem der Ansprüche 2 bis 11, **dadurch gekennzeichnet**, daß die Drehung des Transportrades (8) und der Kurvenscheibe (11) von einem Zahnrad (19), beeinflußt wird, das an der gemeinsamen Welle des Transportrades (8) und der Kurvenscheibe (11) fest angeordnet ist, und daß die Drehung des Zahnrades (19) mittels einer Zahnstange (20) gesteuert wird.

13. Blattfilmmagazin nach Anspruch 12, **dadurch gekennzeichnet**, daß der Bewegungsverlauf der Zahnstange (20) mittels einer Exzenterscheibe (22) gesteuert wird.

14. Blattfilmmagazin nach einem der Ansprüche 1 bis 13, **dadurch gekennzeichnet**, daß das Blattfilmmagazin im Anschluß zur Austrittsseite mit einer Steuervorrichtung (4,33) versehen ist, die gewährleistet, daß nur jeweils ein Filmblatt (23) aus dem Blattfilmmagazin (1) heraustransportiert wird.

15. Blattfilmmagazin nach Ansprüch 14, **dadurch gekennzeichnet**, daß die Steuervorrichtung (4, 33) die Filmaustrittsöffnung (4) umfaßt, deren Höhe weniger als die Stärke von zwei Filmblätter (23) ist, sowie mindestens einen ersten Niederhalter (33), der in dem Blattfilmmagazin (1) im Anschluß an die Filmaustrittsöffnung (4) angebracht ist und der mindestens ein Filmblatt (23) gegen die Filmebene (5) drückt.

## Claims

1. Sheet film magazine (1) for a film changer, having a transporting device (7) for transporting individual sheets (23) of film from a stack of film supported on a film support plane (5), to the receiving part (2) of the film changer, the transporting device having at least one transport wheel (8) which is mounted on a shaft (9), which is parallel to the film support plane, and can be driven by driving means (20) in the direction of transport of the sheets of film, and the transporting device in addition having means (11, 13, 14) which vary the spacing between the sheet (23) of film and the transport wheel in such a manner that the transport wheel rests on the surface of the sheet of film during the transporting of the sheet of film from the film stack to the receiving part and is removed from the surface of the sheet of film after the completion of the film transport, characterized in that the means (11, 13, 14) have separating members (14) which separate the transport wheel (8) from the surface of the sheet of film as soon as the driving means are driven counter to the direction which effects the transport of the sheets of film, as well as further means (11, 13) which are dependent on the angle of rotation of the transport wheel and remove the transport wheel (8) further from the surface of the sheet of film after the removal of said transport wheel from said surface.

2. Sheet film magazine according to Claim 1, characterized in that the further means contain a roller (13) which is arranged in the magazine and rests on a cam disc (11) which is shaped in such a manner that it rests in a first position of the transport wheel (8) on the surface of the sheet of film with the aid of the roller (13) and lifts off this surface in a second position.

3. Sheet film magazine according to Claim 2, characterized in that, at that instant at which the cam disc (11) starts to rotate counter to the direction of film transport, the roller (13) is quickly moved from its position by the separating member (14), so that the transport wheel (8) is separated from the surface of the sheet (23) of film.

4. Sheet film magazine according to Claim 2 or 3, characterized in that the separating members (14) comprise a rocker (14) which can be rotated about an axis (16) and on which the roller (13) is arranged so as to be rotatable about a second axis (17).

5. Sheet film magazine according to one of Claims 2 to 4, characterized in that the cam disc (11) is fixed to the same shaft (9) around which the transport wheel (8) is arranged such that it can rotate.

6. Sheet film magazine according to one of Claims 4 to 5, characterized in that the axes (16, 17) of the roller (13) and of the rocker (14) are positioned in axial alignment to the shaft (9) of the transport wheel (8) and perpendicular to the direction of transport of the sheet (23) of film.

7. Sheet film magazine according to one of Claims 2 to 6, characterized in that the transport wheel (8) or the cam disc (11), respectively, are spring-loaded in such a manner that a force is exerted on these in the direction of the roller (13).

8. Sheet film magazine according to one of Claims 2 to 7, characterized in that the roller (13) is provided with a freewheel device, so that the roller (13) runs in the same direction on the cam disc (11) when the latter is rotated in the direction of transport of the sheet (23) of film and locks when the cam disc (11) is rotated in the opposite direction.

9. Sheet film magazine according to one of Claims 2 to 8, characterized in that the cam disc (11) is a round disc with a recese (12) for the roller (13).

10. Sheet film magazine according to one of Claims 1 to 9, characterized in that the transport wheel (8) is a toothed wheel.

11. Sheet film magazine according to one of Claims 1 to 10, characterized in that the transport wheel (8) is arranged in the region of the film outlet opening (4).

12. Sheet film magazine according to one of Claims 2 to 11, characterized in that the rotation of the transport wheel (8) and of the cam disc (11) is influenced by a toothed gear (19) which is firmly arranged on the common shaft of the transport wheel (8) and of the cam disc (11), and in that the rotation of the toothed wheel (19) is controlled by means of a rack (20).

13. Sheet film magazine according to Claim 12, characterized in that the course of movement of the rack (20) is controlled by means of an eccentric disc (22).

14. Sheet film magazine according to one of Claims 1 to 13, characterized in that the sheet film-magazine is provided, following the outlet side, with a control device (4,33) which ensures that in each case only one sheet (23) of film is transported out of the sheet film magazine (1).

15. Sheet film magazine according to Claim 14, characterized in that the control device (4, 33) comprises the film outlet opening (4), whose height is less than the thickness of two sheets (23) of film, as well as at least one first hold-down device (33) which is mounted in the sheet film magazine, following the film outlet opening (4), and presses at least one sheet (23) of film against the film plane (5).

## Revendications

1. Magasin (1) de films en feuille pour un changeur de film, comportant un dispositif de transport (7) pour transporter des feuilles (23) de film individuelles d'une pile de films, reposant sur un plan (9) de support de films, à la partie de réception (2) du changeur de film, le dispositif de transport ayant au moins une roue de transport (8), qui est montée sur un arbre (9) parallèle au plan de support des films et qui peut être entraînée à l'aide de moyens d'entraînement (20) dans le sens de transport des feuilles de film, et dans lequel le dispositif de transport possède en outre des moyens (11,13, 14), qui modifient la distance entre une feuille de film (23) et la roue de transport de telle sorte que, lors du transport d'une feuille de film la pile de films à la partie de réception, la roue de transport s'applique sur la surface de la feuille de film et qu'une fois terminé le transport du film, la roue de transport est écartée de la surface de la feuille de film, caractérisé par le fait que les moyens (11, 13,14) comportent des organes de séparation (14), qui séparent la roue de transport (8) de la surface de la feuille de film dès que les moyens d'entraînement (20) sont entraînés en sens opposé de celui, dans lequel s'effectue le transport des feuilles de films, ainsi que d'autres moyens (11,13), qui dépendent de la vitesse de rotation de la roue de transport et qui continuent à écarter la roue de transport (8) de la surface de la feuille de film, après que la roue de transport est séparée de cette surface.

2. Magasin de film en feuille suivant la revendication 1, caractérisé par le fait que les autres moyens comportent un galet (13) disposé dans le magasin et qui s'applique sur un disque à came (11), qui est formé de telle sorte qu'à l'aide du galet (13) situé dans une première position, la roue de transport (8) s'applique à la surface de la feuille de film et, dans une seconde position, la feuille de transport s'écarte de cette surface.

3. Magasin de film en feuille suivant la revendication 2, caractérisé par le fait qu'à l'instant où le disque à came (11) commence à tourner en sens opposé au sens de transport du film, le galet (13) est mis rapidement hors de sa position par l'organe de séparation (14) de sorte que la roue de transport (8) est séparée de la surface de la feuille de film (23).

4. Magasin de film en feuille suivant la revendication 2 ou 3, caractérisé par le fait que les organes de séparation (14) comprennent un bras basculant (14), qui peut tourner autour d'un axe (16) et sur lequel le galet (13) est monté de manière à pouvoir tourner autour d'un second axe (17).

5. Magasin de film en feuille suivant l'une des revendications 2 à 4, caractérisé par le fait que le disque à came (11) est fixé sur le même arbre (9), que celui auquel la roue de transport (8) est montée de manière à pouvoir tourner.

6. Magasin de film en feuille suivant l'une des revendications 4 et 5, caractérisé par le fait que les axes (16,17) du galet (13) et du bras basculant (14) sont alignés avec l'axe de l'arbre (9) de la roue de transport (8) et sont perpendiculaires à la direction de transport de la feuille de film (23).

7. Magasin de film en feuille suivant l'une des revendications 2 à 6, caractérisé par le fait que la roue de transport (8) ou le disque à came (11) sont soumis à l'action d'un ressort de telle sorte qu'une force est appliquée à cette roue ou à ce disque en direction du galet (13).

8. Magasin de film en feuille suivant l'une des revendications 2 à 7, caractérisé par le fait que le galet (13) est pourvu d'un dispositif de roue libre, de sorte que le galet (13) tourne conjointement sur le disque à came (11) lorsque ce dernier pivote dans le sens de transport de la feuille de film (23), et se bloque lorsque le disque à came (11) tourne dans le sens opposé.

9. Magasin de film en feuille suivant l'une des revendications 2 à 8, caractérisé par le fait que le disque à came (11) est un disque circulaire possédant un évidement (12) pour le galet (13).

10. Magasin de film en feuille suivant l'une des revendications 1 à 9, caractérisé par le fait que la roue de transport (8) est un pignon.

11. Magasin de film en feuille suivant l'une des revendications 1 à 10, caractérisé par le fait que la roue de transport (8) est disposée au voisinage de l'ouverture (4) de sortie du film.

12. Magasin de film en feuille suivant l'une des revendications 2 à 11, caractérisé par le fait que la rotation de la roue de transport (8) et du disque à came (11) est influencée par un pignon (19), qui est monté fixe sur l'arbre commun de la roue de transport (8) et du disque à came (11), et que la rotation du pignon (19) est commandée au moyen d'une crémaillère (20).

13. Magasin de film en feuille suivant la revendication 12, caractérisé par le fait que la courbe de déplacement de la crémaillère (20) est commandée au moyen d'un disque excentrique (22).

14. Magasin de film en feuille suivant l'une des revendications 1 à 13, caractérisé par le fait que le magasin de film en feuille est muni, à la suite du côté sortie, d'un dispositif de commande (4,33) qui garantit que seule respectivement une feuille de film (23) est extraite du magasin de film en feuille (1).

15. Magasin de film en feuille suivant la revendication 14, caractérisé par le fait que le dispositif de commande (4,33) comprend l'ouverture (4) de sortie du film, dont la hauteur est inférieure à l'épaisseur de deux feuilles de film (23) ainsi qu'au moins un premier dispositif de maintien vers le bas (33), qui est monté dans le magasin de film en feuille (1) en aval de l'ouverture (4) de sortie du film et qui repousse au moins une feuille de film (23) contre le plan (5) du film.
